# EUROPÄISCHE PATENTSCHRIFT

(11) **EP 1 398 094 B1**
(45) Veröffentlichungstag und Bekanntmachung des Hinweises auf die Patenterteilung: **17.05.2006**
(21) Anmeldenummer: 02020284.2
(22) Anmeldetag: 11.09.2002
(51) Int. Cl.: B21D 5/00, G01B 21/02, G01B 21/22

(54) **Verfahren und Vorrichtung zur Bestimmung der Schenkellänge an einem Biegeteil**
Method and device for determining the arm length of bent products
Procédé et dispositif pour déterminer la longueur de branche de pièces cintrées

(43) Veröffentlichungstag der Anmeldung: 17.03.2004
(73) Patentinhaber: TRUMPF Werkzeugmaschinen GmbH + Co. KG, 71254 Ditzingen (DE)
(72) Erfinder: Horn, Armin, 71272 Renningen (DE)
(74) Vertreter: Kohler Schmid Möbus

(56) Entgegenhaltungen:
- US-A- 4 660 293
- US-A- 5 842 366
- US-A1- 2001 049 953
- US-B1- 6 289 598

## Beschreibung

Die Erfindung betrifft ein Verfahren und eine Vorrichtung zur Bestimmung der Schenkellänge wenigstens eines von zwei mittels eines Biegewerkzeugs unter einem Biegewinkel gegeneinander gebogener Schenkel an einem Biegeteil, wobei ein Biegewinkelscheitel im Schnittpunkt geradliniger und den Biegewinkel einschließender Verlaufsrichtungen der Schenkel des Biegeteils liegt und ein Schenkelende des betreffenden Schenkels diesen an der von dem Biegewinkelscheitel abliegenden Seite begrenzt. Die Erfindung betrifft des Weiteren ein Verfahren und eine Vorrichtung zum Biegen von Werkstücken, im Falle derer von dem vorstehenden Verfahren bzw. von der vorstehenden Vorrichtung zur Bestimmung der Schenkellänge an einem Biegeteil Gebrauch gemacht wird.

Neben dem Biegewinkel bildet die Schenkellänge das wichtigste Funktionsmaß eines Biegeteils. Derzeit üblich ist es, die Schenkellänge an einem mittels einer Biegemaschine erstellten Biegeteil nach dessen Entnahme aus der Biegemaschine manuell zu bestimmen. Die Genauigkeit der Schenkellängenbestimmung wird dabei insbesondere durch den Umstand beeinträchtigt, dass die zu vermessenden Schenkel des Biegeteils an der Biegelinie nicht ideal geradlinig aneinanderstoßen sondern vielmehr mit einem Radius ineinander übergehen. Der Biegewinkelscheitel als einer der Endpunkte eines Biegeteilschenkels und als Schnittpunkt der geradlinigen Verläufe beider Biegeteilschenkel ist daher nicht real existent. Folglich kann der Biegewinkelscheitel bei der Bestimmung einer Schenkellänge an einem Biegeteil beispielsweise nicht unmittelbar angetastet werden. Besondere und nur unter Einsatz aufwändiger Messtechnik zu bewältigende Schwierigkeiten treten im Falle von offenen Biegewinkeln, d.h. von Biegewinkeln über 90°, auf. Eine solche Messvorrichtung ist beispielweise aus der US 6 289 598 B1 bekannt.

Eine automatisierte und möglichst genaue Ermittlung von Schenkellängen an Biegeteilen insbesondere im Interesse einer Optimierung der biegenden Werkstückbearbeitung zu ermöglichen, hat sich die vorliegende Erfindung zum Ziel gesetzt.

Erfindungsgemäß gelöst wird diese Aufgabe durch die Verfahren gemäß den Patentansprüchen 1 und 6 sowie durch die Vorrichtungen gemäß den Patentansprüchen 8 und 18.

Demnach verbleibt das zu vermessende Biegeteil im Falle der Erfindung in dem Biegewerkzeug, wo es definiert angeordnet ist. Die betreffende Schenkellänge wird im Interesse einer möglichst genauen Bestimmung nicht unmittelbar sondern über die Lage des Biegewinkelscheitels und die Lage des Schenkelendes ermittelt. Als Lage des Biegewinkelscheitels wird dabei die Lage des in der Praxis üblicherweise nicht real existierenden Schnittpunktes der geradlinigen Verläufe der aneinanderstoßenden Biegeteilschenkel berücksichtigt.

Besondere Ausführungsarten des Verfahrens nach Patentanspruch 1 sind in den abhängigen Patentansprüchen 2 bis 5, eine besondere Ausführungsart des Verfahrens nach Patentanspruch 6 ist in dem abhängigen Patentanspruch 7 beschrieben. Besondere Ausführungsarten der Vorrichtung nach Patentanspruch 8 ergeben sich aus den abhängigen Patentansprüchen 9 bis 17, besondere Ausführungsarten der Vorrichtung nach Patentanspruch 18 aus den abhängigen Patentansprüchen 19 bis 24.

Gemäß Patentanspruch 2 wird das zu vermessende Biegeteil zur definierten Anordnung in dem Biegewerkzeug gehalten. Vorrichtungsbezogen umgesetzt wird dieses Verfahrensmerkmal durch die Haltevorrichtung gemäß Patentanspruch 9. In bevorzugter Ausgestaltung der erfindungsgemäßen Biegevorrichtung dient als Haltevorrichtung zur definierten Anordnung des Biegeteils in dem Biegewerkzeug das Biegewerkzeug selbst (Patentanspruch 19).

Die Bestimmung der Lage des Biegewinkelscheitels erfolgt in vorteilhafter Ausgestaltung der Erfindung unter Ermittlung des Biegewinkels (Patentansprüche 3, 10). Zur Ermittlung des Biegewinkels bestehen dabei verschiedene Möglichkeiten. Beispielsweise kann der Biegewinkel gemessen werden. Alternativ kann der Biegewinkel aber auch nach einer sogenannten, in einer Vorrichtungssteuerung zu hinterlegenden "Biegeformel" berechnet werden. Die Biegeformel beschreibt den Biegewinkel als Funktion von werkstück- und werkzeugbezogenen Parametern.

Im Falle der in Patentanspruch 4 beschriebenen Variante des erfindungsgemäßen Verfahrens zur Schenkellängenbestimmung wird das zu vermessende Biegeteil an einer Anlage abgestützt und die Lage des Biegewinkelscheitels anhand der Lage der Abstützung des Biegeteils an der Anlage bestimmt. Ebenso wie der Biegewinkel stellt auch die Lage der Abstützung des Biegeteils an der betreffenden Anlage eine mit der erforderlichen Genauigkeit und mit herkömmlichen Mitteln bereitzustellende Grundlage für die Bestimmung der Lage des Biegewinkelscheitels dar. Entsprechend sind an der erfindungsgemäßen Vorrichtung gemäß Patentanspruch 11 eine mit der Auswerteeinrichtung in Verbindung stehende Rechnereinheit sowie eine Anlage für das Biegeteil vorgesehen, an welcher das Biegeteil bei der Bestimmung der Lage des Biegewinkelscheitels abgestützt ist. Die Rechnereinheit dient dazu, anhand der Lage der Abstützung des Biegeteils an der Anlage die Lage des Biegewinkelscheitels zu ermitteln. In bevorzugter Ausgestaltung der erfindungsgemäßen Biegevorrichtung dient gemäß Patentanspruch 20 das Biegewerkzeug als Anlage zur Abstützung des Biegeteils bei der Bestimmung der Lage des Biegewinkelscheitels.

Gemäß den Patentansprüchen 5, 12 und 17 werden im Falle der Erfindung der Biegewinkel und/oder die Lage des Schenkelendes vorzugsweise berührungslos, insbesondere optisch bestimmt. Zu diesem Zweck denkbar ist beispielsweise die Anwendung des Lichtschnittverfahrens bzw. der Einsatz von Vorrichtungen zur Durchführung des Lichtschnittverfahrens. Alternativ oder ergänzend können aber auch taktile Verfahren bzw. Systeme zum Einsatz kommen. So ist etwa im Falle der in Patentanspruch 14 beschriebenen Ausführungsform der erfindungsgemäßen Vorrichtung zur Schenkellängenbestimmung als Erfassungseinheit zur Erfassung der Lage des Schenkelendes eine Tasteinrichtung vorgesehen, die an das Schenkelende anlegbar ist. Gemäß Patentanspruch 15 kann diese Tasteinrichtung mit dem Schenkelende bei dessen Bewegung während des Biegevorgangs bewegbar sein. Insbesondere kann als Tasteinrichtung ein Positionieranschlag für das zu biegende Werkstück genutzt werden (Patentanspruch 16). Entsprechend ist an der erfindungsgemäßen Biegevorrichtung gemäß Patentanspruch 21 als Tasteinrichtung der Erfassungseinheit zur Erfassung der Lage des Schenkelendes ein Positionieranschlag der Biegevorrichtung vorgesehen, an welchem das Werkstück vor der Bearbeitung zur Positionierung gegenüber dem Biegewerkzeug anlegbar ist. Im Falle der Erfindungsbauart nach Patentanspruch 22 wird ein derartiger Positionieranschlag zur wenigstens teilweisen Lagerung einer berührungslosen, insbesondere optischen Erfassungseinheit zur Erfassung der Lage des Schenkelendes verwendet. Ausweislich Patentanspruch 23 ist der Positionieranschlag in Weiterbildung der erfindungsgemäßen Biegevorrichtung gesteuert bewegbar.

Gemäß den Patentansprüchen 7 und 24 wird sowohl im Rahmen des erfindungsgemäßen Biegeverfahrens als auch an der erfindungsgemäßen Biegevorrichtung ein als Ergebnis der Bestimmung der Schenkellänge eines Schenkels erhaltener Schenkellängen-Istwert mit einem Schenkellängen-Sollwert verglichen und anhand des Ergebnisses dieses Ist-/Sollwert-Vergleichs wenigstens ein für die Schenkellänge maßgebender Parameter zumindest eines nachfolgenden Biegevorgangs definiert. Als zu definierender Parameter in Frage kommt beispielsweise der Abstand, mit welchem Positionieranschläge für das zu biegende Werkstück gegenüber der von dem Biegewerkzeug definierten Biegelinie einzustellen sind. Als nachfolgende Biegevorgänge sind sowohl Biegevorgänge an anderen Werkstücken als auch Biegevorgänge an dem selben Werkstück denkbar, an welchem zuvor die Schenkellänge als Grundlage für die nachfolgende Parameterdefinition bestimmt worden ist. Erfindungsgemäß besteht insbesondere die Möglichkeit, an Biegeteilen mit mehrfachen Abkantungen die Parameter der einzelnen Biegevorgänge auf der Grundlage des jeweils vorausgehenden Schenkellängen-Ist-/Sollwert-Vergleichs derart aufeinander abgestimmt zu definieren, dass die für das Biegeteil vorgegebene Fertigungstoleranz von den einzelnen Schenkellängen in Summe eingehalten wird.

Nachstehend wird die Erfindung anhand schematischer Darstellungen zu einem Ausführungsbeispiel näher erläutert. Es zeigen:
- Figur 1: eine CNC-gesteuerte Biegemaschine mit Gesenkbiegewerkzeug und Hinteranschlagsystem in der stark schematisierten Seitenansicht,
- Figur 2: das Hinteranschlagsystem der Biegemaschine gemäß Figur 1 in Einzeldarstellung,
- Figur 3: die Verhältnisse an dem Gesenkbiegewerkzeug der Biegemaschine gemäß Figur 1 in Einzeldarstellung und
- Figur 4: eine stark schematisierte Darstellung eines Teiles der CNC-Steuerung der Biegemaschine gemäß Figur 1.

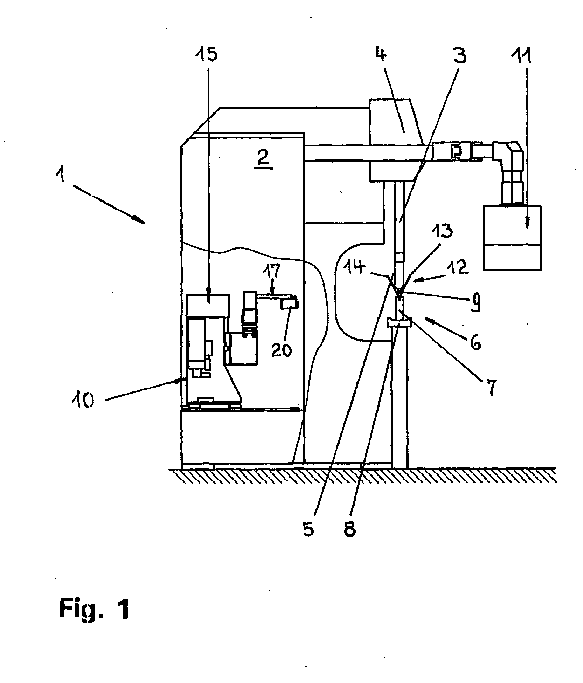

Gemäß Figur 1 besitzt eine Biegemaschine 1 für die Blechbearbeitung ein Maschinengestell 2, an dem ein Pressbalken 3 heb-und senkbar geführt ist. Zum Antrieb des Pressbalkens 3 dient ein hydraulischer Pressbalkenantrieb 4.

An dem Pressbalken 3 gehaltert ist ein Oberwerkzeug 5 eines Biegewerkzeuges in Form eines Gesenkbiegewerkzeuges 6. Dem Oberwerkzeug 5 zugeordnet ist ein Unterwerkzeug 7, das auf einem Maschinentisch 8 gelagert ist.

Eine andeutungsweise erkennbare taktile Biegewinkelsensorik 9 ist in das Oberwerkzeug 5 des Gesenkbiegewerkzeuges 6 integriert. Die Biegewinkelsensorik 9 entspricht in Aufbau und Funktionsweise der in EP 0 775 028 B1 beschriebenen Vorrichtung.

Auf der von der Bedienerseite der Biegemaschine 1 abgewandten Seite des Gesenkbiegewerkzeuges 6 ist ein Hinteranschlagsystem 10 untergebracht. Gegenüberliegend ist eine Maschinensteuerung in Form einer CNC-Steuerung 11 vorgesehen.

In dem dargestellten Betriebszustand ist ein Abkantvorgang abgeschlossen. Bei diesem Abkantvorgang erstellt wurde ein Biegeteil 12 mit Schenkeln 13, 14. Ausweislich Figur 1 wird das Biegeteil 12 zwischen dem Oberwerkzeug 5 und dem Unterwerkzeug 7 mit definierter Ausrichtung gehalten.

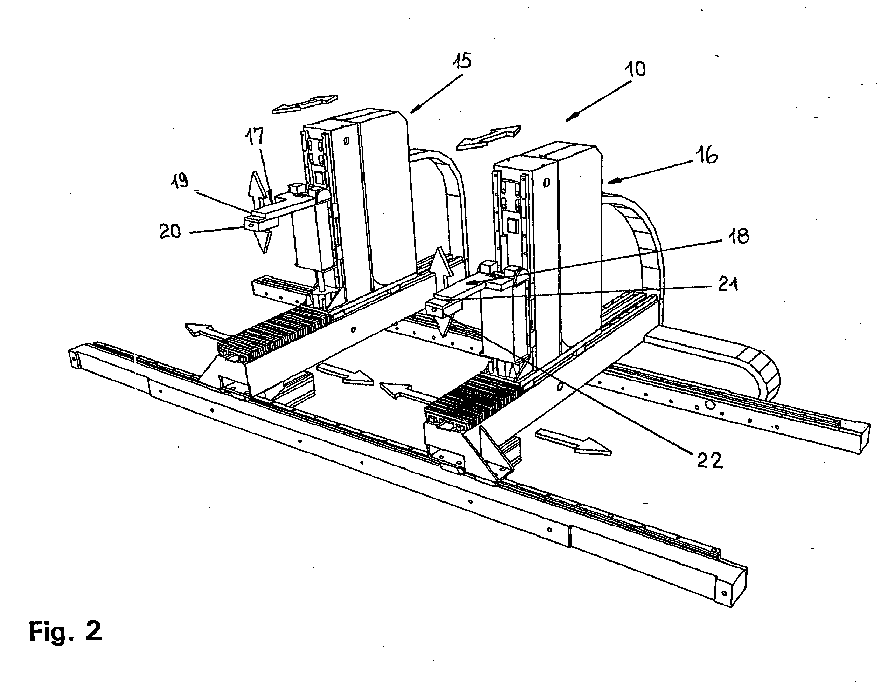

Wie im Einzelnen Figur 2 entnommen werden kann, umfasst das Hinteranschlagsystem 10 zwei Hinteranschläge 15, 16. Dabei weist der Hinteranschlag 15 einen Anschlagfinger 17, der Hinteranschlag 16 einen Anschlagfinger 18 auf. Die Anschlagfinger 17, 18 bilden Positionieranschläge für den abzukantenden ebenen Blechzuschnitt und sind unabhängig voneinander jeweils in den drei Richtungen des Raumes verfahrbar. Die Bewegungssteuerung der Anschlagfinger 17, 18 erfolgt mittels der CNC-Steuerung 11. Unterhalb einer Werkstückanlage 19 ist an dem Anschlagfinger 17 eine Kamera 20 angebracht. Entsprechend ist der Anschlagfinger 18 unterhalb einer Werkstückanlage 21 mit einer Kamera 22 versehen. Die Richtungen der von den Anschlagfingern 17, 18 ausführbaren Bewegungen sind in Figur 2 durch Pfeile veranschaulicht.

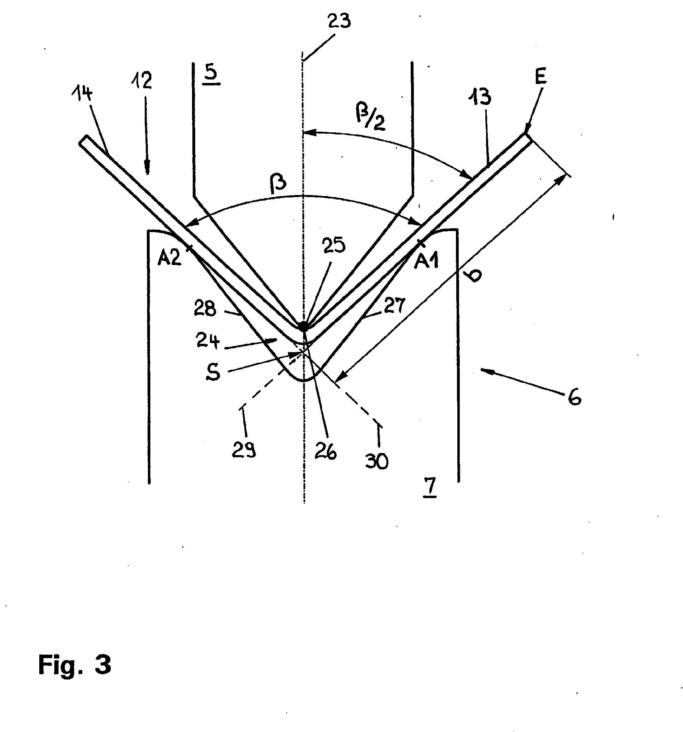

Gemäß Figur 3 herrschen an dem Gesenkbiegewerkzeug 6 symmetrische Verhältnisse bezüglich einer Winkelhalbierenden 23 einer Gesenknut 24 des Unterwerkzeuges 7. Die Winkelhalbierende 23 der Gesenknut 24 fällt zusammen mit der Winkelhalbierenden eines Biegewinkels β, der von den Schenkeln 13, 14 des Biegeteils 12 eingeschlossen wird. Zwischen der Winkelhalbierenden 23 und den Schenkeln 13, 14 des Biegeteils 12 liegt dementsprechend jeweils ein Winkel der Größe β/2. An seiner Oberseite wird das Biegeteil 12 von dem Oberwerkzeug 5 mit einer Oberwerkzeugspitze 25 an einer Biegelinie 26 beaufschlagt. Mit seiner Unterseite ist das Biegeteil 12 an Flanken 27, 28 der Gesenknut 24 abgestützt, die somit eine Anlage für das Biegeteil 12 bilden. Die Punkte bzw. Linien der Abstützung des Biegeteils 12 an den Flanken 27, 28 der Gesenknut 24 sind in Figur 3 mit A1 und A2 bezeichnet.

Wie in Figur 3 deutlich zu erkennen ist, stoßen die Schenkel 13, 14 des Biegeteils 12 nicht mit ideal geradlinigem Verlauf aneinander sondern gehen vielmehr mit einem Radius ineinander über. Eine geradlinige Verlaufsrichtung 29 des Schenkels 13 und eine geradlinige Verlaufsrichtung 30 des Schenkels 14 schneiden sich in einem Biegewinkelscheitel S, der in Richtung der Winkelhalbierenden 23 unterhalb des Biegeteils 12 liegt. Eine Schenkellänge b des Schenkels 13 erstreckt sich zwischen dem Biegewinkelscheitel S und einem Schenkelende E.

Aus Gründen der Übersichtlichkeit ist in Figur 3 die in das Oberwerkzeug 5 des Gesenkbiegewerkzeuges 6 integrierte taktile Biegewinkelsensorik 9 nicht dargestellt. In bekannter Weise umfasst die Biegewinkelsensorik 9 zwei Tastscheiben mit unterschiedlichem Durchmesser, die in ihrer Funktionsstellung symmetrisch bezüglich der Winkelhalbierenden 23 angeordnet sind und jeweils an beiden Schenkeln 13, 14 des Biegeteils 12 anliegen. Ein weiterer wesentlicher Bestandteil der Biegewinkelsensorik 9 ist ein Auswerterechner, der anhand der Differenz der Radien der beiden Tastscheiben sowie anhand des Abstandes der Tastscheibenmittelpunkte in Richtung der Winkelhalbierenden 23 den Biegewinkel β bestimmt. Bei der Biegewinkelsensorik 9 handelt es sich somit um eine Vorrichtung zur Ermittlung des Biegewinkels β.

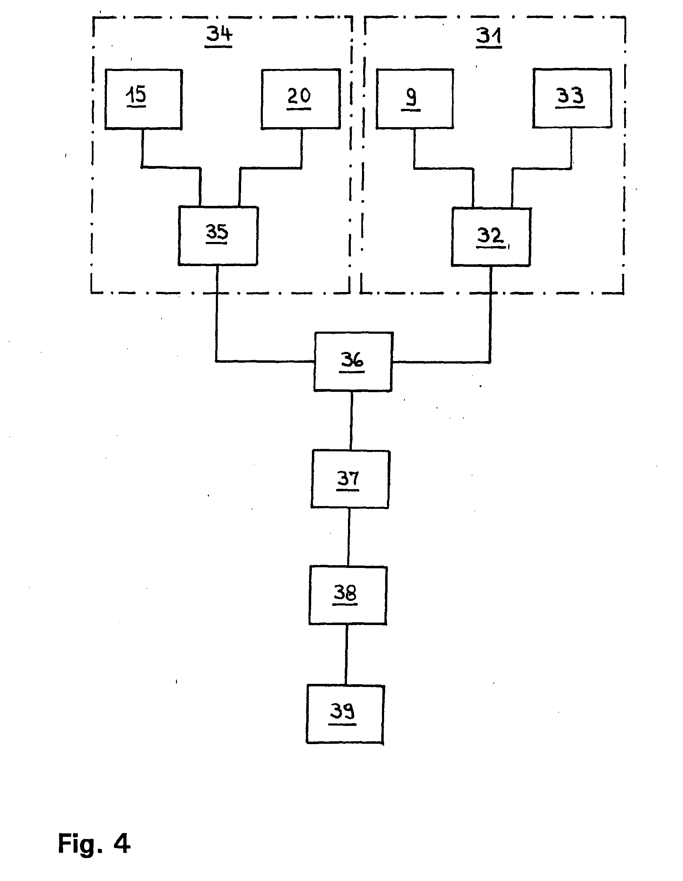

Gemäß Figur 4 ist die Biegewinkelsensorik 9 Teil einer Vorrichtung 31 zur Bestimmung der Lage des Biegewinkelscheitels S. Verbunden ist die Biegewinkelsensorik 9 dabei mit einer Rechnereinheit 32 die ihrerseits Zugriff hat auf einen Speicher 33, in welchem der Verlauf der Winkelhalbierenden 23 der Gesenknut 24 an dem Unterwerkzeug 7 sowie die Lage der Abstützpunkte A1, A2 an den Flanken 27, 28 der Gesenknut 24 in Abhängigkeit von dem Biegewinkel β hinterlegt sind. Insofern bilden auch die Flanken 27, 28 der Gesenknut 24 einen Teil der Vorrichtung 31 zur Bestimmung der Lage des Biegewinkelscheitels S.

Anhand des mittels der Biegewinkelsensorik 9 ermittelten Biegewinkels β bestimmt die Rechnereinheit 32 den Winkel β/2, unter welchem sich die geradlinige Verlaufsrichtung 29 des Schenkels 13 des Biegeteils 12 gegenüber der Winkelhalbierenden 23 der Gesenknut 24 erstreckt. Aus dem Winkel β/2, der Lage von A1 sowie dem Verlauf der Winkelhalbierenden 23 ermittelt die Rechnereinheit 32 schließlich die Lage des Biegewinkelscheitels S als Schnittpunkt einer die Flanke 27 der Gesenknut 24 in A1 tangierenden und unter dem Winkel β/2 gegenüber der Winkelhalbierenden 23 verlaufenden Geraden mit der Winkelhalbierenden 23.

Eine in Figur 4 ebenfalls dargestellte Vorrichtung 34 zu Bestimmung der Lage des Schenkelendes E umfasst den Hinteranschlag 15 des Hinteranschlagsystems 10 sowie die an dem Anschlagfinger 17 des Hinteranschlages 15 angebrachte Kamera 20. Diese bildet eine Erfassungseinheit zur Erfassung der Lage des Schenkelendes E. Das von der Kamera 20 aufgenommene Bild des Schenkelendes E wird in Form von Signalen einer Rechnereinheit 35 übermittelt. Ebenfalls mit der Rechnereinheit 35 verbunden ist der Hinteranschlag 15, im Einzelnen dessen Bewegungssteuerung. Nachdem die Kamera 20 an dem Anschlagfinger 17 eine definierte Position einnimmt, ist über die Lage des Anschlagfingers 17 die Lage der Kamera 20 bestimmt. Aus der so gewonnenen Lageinformation sowie den von der Kamera 20 stammenden Signalen bestimmt die Rechnereinheit 35 die Lage des Schenkelendes E.

Die Nutzung des Anschlagfingers 17 zur Halterung der Kamera 20 empfiehlt sich insbesondere aufgrund des Umstandes, dass der Anschlagfinger 17 zu dem Zeitpunkt, zu welchem die Lage des Schenkelendes E zu bestimmen ist, außer Funktion und somit frei verfügbar ist. Genutzt wird der Anschlagfinger 17, im Einzelnen dessen Werkstückanlage 19, lediglich zu Beginn des Biegevorgangs. Zu diesem Zeitpunkt wird der ebene Blechzuschnitt, aus welchem ein Biegeteil zu erstellen ist, zur Positionierung gegenüber dem Gesenkbiegewerkzeug 6 an der Werkstückanlage 19, unter Umständen auch an der Werkstückanlage 21 des Anschlagfingers 18 angelegt. Mittels der als Positionieranschläge dienenden Anschlagfinger 17, 18 wird der spätere Verlauf der Biegelinie an dem Biegeteil definiert. Während des Abkantvorgangs und danach ist der anfänglich ebene Blechzuschnitt von den Anschlagfingern 17, 18 abgehoben. Etwa der bei einem derartigen Abkantvorgang unter anderem erstellte Schenkel 14 des Biegeteils 12 liegt mit Abstand oberhalb der Anschlagfinger 17, 18. Letztere sind folglich nach Beginn des Abkantvorganges frei verfahrbar. Aufgrund ihrer dreiachsigen Beweglichkeit können die Anschlagfinger 17, 18 jede beliebige Position im Raum einnehmen und somit die Kamera 20 in jede gewünschte Position überführen. Insbesondere ist es möglich, die Kamera 20 derart auszurichten, dass ihre Blickrichtung etwa zur Vermeidung von Parallaxenfehlern senkrecht zu dem Schenkelende E verläuft. Ergänzend oder alternativ zu der Kamera 20 kann auch die Kamera 22 an dem Hinteranschlag 16 als Erfassungseinheit zur optischen Erfassung der Lage des Schenkelendes E dienen. Die Rechnereinheit 35 hat dann (auch) auf die Bewegungssteuerung des Hinteranschlages 16 Zugriff.

Aus der mittels der Vorrichtung 31 bestimmten Lage des Biegewinkelscheitels S sowie aus der mittels der Vorrichtung 34 ermittelten Lage des Schenkelendes E wird in einer Auswerteeihrichtung 36 durch vektorielle Distanzbestimmung die Schenkellänge b als Strecke zwischen dem Biegewinkelscheitel S und dem Schenkelende E berechnet. Der so bestimmte Schenkellängen-Istwert wird in einer Vergleichseinheit 37 mit einem dort hinterlegten Schenkellängen-Sollwert verglichen. Weicht der Schenkellängen-Ist- von dem Schenkellängen-Sollwert ab, so wird diese Abweichung durch eine Korrektureinheit 38 verarbeitet. In dem gezeigten Beispielsfall wird mittels der Korrektureinheit 38 ein Stellantrieb 39 des Hinteranschlagsystems 10 angesteuert.

Sollen etwa nacheinander Abkantungen an verschiedenen Blechen aber mit gleichem Schenkellängen-Sollwert erstellt werden und ist die bestimmte Schenkellänge b kleiner als dieser Schenkellängen-Sollwert, so wird durch entsprechende Ansteuerung des Stellantriebes 39 das Hinteranschlagsystem 10 um einen in der Korrektureinheit 38 ermittelten Betrag gegenüber dem Gesenkbiegewerkzeug 6 zurückverfahren. Sind an ein und demselben Blech mehrere Abkantungen zu erstellen, so kann beispielsweise eine an der ersten Abkantung festgestellte Abweichung des Schenkellängen-Istwertes von dem Schenkellängen-Sollwert bei der Einstellung des Hinteranschlagsystems 10 für den zweiten Biegevorgang berücksichtigt werden. Auf diese Art und Weise kann automatisiert dafür gesorgt werden, dass die erstellten Abkantungen in Summe die vorgegebene Toleranz einhalten.

Im Übrigen können an der Biegemaschine 1 die Lage des Biegewinkelschenkels S und die Lage des Schenkelendes E auch abweichend von dem vorstehend Beschriebenen bestimmt werden.

So lässt sich etwa der Biegewinkel β auch mittels der in der CNC-Steuerung 11 hinterlegten Biegeformel berechnen. Diese Biegeformel beschreibt den Biegewinkel β als Funktion der Geometrie von Oberwerkzeug 6 und Unterwerkzeug 7, der Materialfestigkeit, der Dicke des zu verformenden Bleches und der Eindringtiefe des Oberwerkzeugs 5 an dem Unterwerkzeug 7. Außerdem können zur Ermittlung des Biegewinkels β anstelle der taktilen Biegewinkelsensorik 9 auch berührungslose optische Systeme eingesetzt werden. Denkbar ist es, zu diesem Zweck zumindest eine der Kameras 20, 22 an dem Hinteranschlagsystem 10 einzusetzen. Entsprechend lässt sich die Lage des Schenkelendes E mit taktilen Einrichtungen bestimmen. Beispielsweise kann wenigstens einer der Anschlagfinger 17, 18 an dem Schenkelende E anliegend diesem während des Abkantvorganges folgen. Durch die Lage des oder der Anschlagfinger 17, 18 ist die von dem Schenkelende E eingenommene Position definiert. Schließlich besteht eine Möglichkeit zur Bestimmung der Lage des Biegewinkelscheitels S und/oder zur Bestimmung der Lage des Schenkelendes E in der Anwendung des sogenannten Lichtschnittverfahrens. Beschrieben ist das Lichtschnittverfahren sowie dessen technische Umsetzung beispielsweise in DE 43 12 565 A1. Wenigstens eine der Kameras 20, 22 des Hinteranschlagsystems 10 kann dabei unter dem sogenannten Triangulationswinkel angeordnet werden und eine an dem Biegeteil 12 erzeugte Lichtspur detektieren.

Außer zur Korrektur nachfolgender Bearbeitungsvorgänge kann die Bestimmung der Schenkellänge b auch dazu dienen, das erstellte Biegeteil 12 auf Abweichungen von seiner dreidimensionalen Soll-Gestalt zu überprüfen. So kann etwa bei größeren Abkantlängen die Schenkellänge b an mehreren Stellen entlang der Biegelinie 26 ermittelt werden. Auch denkbar ist eine Überprüfung der Winkeligkeit des Biegeteils 12. Die ermittelten Messdaten lassen sich in jedem Fall automatisiert protokollieren. Die Auswirkungen der von der Korrektureinheit 38 vorgegebenen Korrekturen können bei Bedarf visualisiert werden.

## Patentansprüche

1. Verfahren zur Bestimmung der Schenkellänge (b) wenigstens eines von zwei mittels eines Biegewerkzeugs (6) unter einem Biegewinkel (β) gegeneinander gebogener Schenkel (13, 14) an einem Biegeteil (12), wobei ein Biegewinkelecheitel (S) im Schnittpunkt geradliniger und den Biegewinkel (β) einschließender Verlaufsrichtungen (29, 30) der Schenkel (13, 14) des Biegeteils (12) liegt und wobei die Schenkellänge (b) aus der Lage des Biegewinkelscheitels (S) und aus der Lage eines Schenkelendes (E), welches den betreffenden schenkel (13, 14) an der von dem Biegewinkelscheitel (S) abliegenden Seite begrenzt, bestimmt wird als Strecke zwischen dem Biegewinkelscheitel (S) und dem Schenkelende (E) des betreffenden Schenkels (13, 14), **dadurch gekennzeichnet, dass** bei in dem Biegewerkzeug (6) definiert angeordnetem Biegeteil (12) die Lage des Biegewinkelscheitels (S) sowie die Lage des Schenkelendes (E) des betreffenden Schenkels (13, 14) bestimmt werden und dass aus der bestimmten Lage des Biegewinkelscheitels (S) und aus der bestimmten Lage des Schenkelendes (E) die Schenkellänge (b) bestimmt wird.

2. Verfahren nach Anspruch 1, **dadurch gekennzeichnet, dass** das Biegeteil (12) zur definierten Anordnung in dem Biegewerkzeug (6) gehalten wird.

3. Verfahren nach Anspruch 1 oder 2, **dadurch gekennzeichnet, dass** die Lage des Biegewinkelscheitels (S) unter Ermittlung des Biegewinkels (β) bestimmt wird.

4. Verfahren nach einem der vorhergehenden Ansprüche, **dadurch gekennzeichnet, dass** das Biegeteil (12) bei der Bestimmung der Lage des Biegewinkelscheitels (S) an einer Anlage (27, 28) abgestützt ist und dass die Lage des Biegewinkelscheitels (S) anhand der Lage der Abstützung des Biegeteils (12) an der Anlage (27, 28) bestimmt wird.

5. Verfahren nach einem der vorhergehenden Ansprüche, **dadurch gekennzeichnet, dass** der Biegewinkel (β) zur Bestimmung der Lage des Biegewinkelscheitels (S) berührungslos, insbesondere optisch gemessen und/oder dass die Lage des Schenkelendes (E) berührungslos, insbesondere optisch bestimmt wird.

6. Verfahren zum Biegen von Werkstücken, insbesondere von Blechen, wobei an dem Werkstück mittels eines Biegewerkzeuges (6) wenigstens zwei Schenkel (13, 14) zur Erstellung eines Biegeteils (12) unter einem Biegewinkel (β) gegeneinander gebogen werden und die Schenkellänge (b) wenigstens eines der Schenkel (13, 14) des Biegeteils (12) bestimmt wird, wobei ein Biegewinkelscheitel (S) im Schnittpunkt geradliniger und den Biegewinkel (β) einschließender Verlaufsrichtungen (29, 30) der Schenkel (13, 14) des Biegeteils (12) liegt und ein Schenkelende (E) des betreffenden Schenkels (13, 14) diesen an der von dem Biegewinkelscheitel (S) abliegenden Seite begrenzt, **dadurch gekennzeichnet, dass** die Schenkellänge (b) wenigstens eines der Schenkel (13, 14) des Biegeteils (12) nach einem Verfahren gemäß einem der vorhergehenden Ansprüche bestimmt wird.

7. Verfahren nach Anspruch 6, **dadurch gekennzeichnet, dass** ein als Ergebnis der Bestimmung der Schenkellänge (b) eines Schenkels (13, 14) erhaltener Schenkellängen-Istwert mit einem Schenkellängen-Sollwert verglichen wird und dass anhand des Ergebnisses dieses Ist-/Sollwert-Vergleichs wenigstens ein für die Schenkellänge (b) maßgebender Parameter zumindest eines nachfolgenden Biegevorgangs definiert wird.

8. Vorrichtung zur Bestimmung der Schenkellänge (b) wenigstens eines von zwei mittels eines Biegewerkzeugs (6) unter einem Biegewinkel (β) gegeneinander gebogener Schenkel (13, 14) an einem Biegeteil (12), wobei ein Biegewinkelscheitel (S) im Schnittpunkt geradliniger und den Biegewinkel (β) einschließender Verlaufsrichtungen (29, 30) der Schenkel (13, 14) des Biegeteils (12) liegt, wobei eine Vorrichtung (34) zur Bestimmung der Lage eines Schenkelendes (E) vorgesehen ist, welches den betreffenden Schenkel (13, 14) an der von dem Biegewinkelscheitel (S) abliegenden Ende begrenzt und wobei die Schenkellänge (b) als Strecke zwischen dem Biegewinkelscheitel (S) und dem Schenkelende (E) bestimmbar ist, **dadurch gekennzeichnet, dass** eine Vorrichtung (31) zur Bestimmung der Lage des Biegewinkelscheitels (S) sowie eine Auswerteeinrichtung (36) vorgesehen sind, wobei mittels der vorrichtung (31) zur Bestimmung der Lage des Biegewinkelscheitels (S) und mittels der Vorrichtung (34) zur Bestimmung der Lage des Schenkelendes (E) die Lage des Biegewinkelscheitele (S) und die Lage des Schenkelendes (E) bei in dem Biegewerkzeug (6) definiert angeordnetem Biegeteil (12) bestimmbar sind und wobei mittels der Auswerteeinrichtung (36) aus der bestimmten Lage des Biegewinkelscheitels (S) und aus der bestimmten Lage des Schenkelendes (E) die Schenkellänge (b) bestimmbar ist.

9. Vorrichtung nach Anspruch 8, **dadurch gekennzeichnet, dass** eine Haltevorrichtung vorgesehen ist, mittels derer das Biegeteil (12) bei der Bestimmung der Lage des Biegewinkelscheitels (S) und bei der Bestimmung der Lage des Schenkelendes (E) in dem Biegewerkzeug (6) definiert gehalten ist.

10. Vorrichtung nach Anspruch 8 oder 9, **dadurch gekennzeichnet, dass** die Vorrichtung (31) zur Bestimmung der Lage des Biegewinkelscheitels (S) eine Vorrichtung (9) zur Ermittlung des Biegewinkels (β) sowie eine Rechnereinheit (32) umfasst, die einerseits mit der Vorrichtung (9) zur Ermittlung des Biegewinkels (β) und andererseits mit der Auswerteeinrichtung (36) in Verbindung steht und dass mittels der Rechnereinheit (32) anhand des ermittelten Biegewinkels (β) die Lage des Biegewinkelscheitels (S) bestimmbar ist.

11. Vorrichtung nach einem der Ansprüche 8 bis 10, **dadurch gekennzeichnet, dass** die Vorrichtung (31) zur Bestimmung der Lage des Biegewinkelscheitels (S) eine mit der Auswerteeinrichtung (36) in Verbindung stehende Rechnereinheit (32) sowie eine Anlage (27, 28) für das Biegeteil (12) umfasst, an welcher das Biegeteil (12) bei der Bestimmung der Lage des Biegewinkelscheitels (S) abgestützt ist und dass mittels der Rechnereinheit (32) anhand der Lage der Abstützung des Biegeteils (12) an der Anlage (27, 28) die Lage des Biegewinkelscheitels (S) bestimmbar ist.

12. Vorrichtung nach einem der Ansprüche 8 bis 11, **dadurch gekennzeichnet, dass** die Vorrichtung zur Ermittlung des Biegewinkels (β) als berührungslos arbeitende, insbesondere als optische Messvorrichtung ausgebildet ist.

13. Vorrichtung nach einem der Ansprüche 8 bis 12, **dadurch gekennzeichnet, dass** die Vorrichtung (34) zur Bestimmung der Lage des Schenkelendes (E) eine Erfassungseinheit (20, 21) zur Erfassung der Lage des Schenkelendes (E) sowie eine Rechnereinheit (35) umfasst, die einerseits mit der Erfassungseinheit (20, 21) und andererseits mit der Auswerteeinrichtung (36) in Verbindung steht und dass mittels der Rechnereinheit (35) anhand der mittels der Erfassungseinheit (20, 21) erfassten Lage des Schenkelendes (E) die Lage des Schenkelendes (E) bestimmbar ist.

14. Vorrichtung nach einem der Ansprüche 8 bis 13, **dadurch gekennzeichnet, dass** die Erfassungseinheit zur Erfassung der Lage des Schenkelendes (E) eine Tasteinrichtung aufweist, die an das Schenkelende (E) anlegbar ist.

15. Vorrichtung nach einem der Ansprüche 8 bis 14, **dadurch gekennzeichnet, dass** die an das Schenkelende (E) angelegte Tasteinrichtung mit dem Schenkelende (E) bei dessen Bewegung während des Biegevorgangs bewegbar ist.

16. Vorrichtung nach einem der Ansprüche 8 bis 15, **dadurch gekennzeichnet, dass** die Tasteinrichtung von einem Positionieranschlag (17, 18) für das zu biegende Werkstück gebildet ist.

17. Vorrichtung nach einem der Ansprüche 8 bis 16, **dadurch gekennzeichnet, dass** die Erfassungseinheit (20, 21) zur Erfassung der Lage des Schenkelendes (E) als berührungslos arbeitende, insbesondere als optische Erfassungseinheit (20, 21) ausgebildet ist.

18. Vorrichtung zum Biegen von Werkstücken, insbesondere von Blechen, mit einem Biegewerkzeug (6), mittels dessen an einem Werkstück wenigstens zwei Schenkel (13, 14) zur Erstellung eines Biegeteils (12) unter einem Biegewinkel (β) gegeneinander biegbar sind, wobei ein Biegewinkelscheitel (S) im Schnittpunkt geradliniger und den Biegewinkel (β) einschließender Verlaufsrichtungen (29, 30) der Schenkel (13, 14) des Biegeteils (12) liegt und ein Schenkelende (E) des betreffenden Schenkels (13, 14) diesen an der von dem Biegewinkelscheitel (S) abliegenden Seite begrenzt, **dadurch gekennzeichnet, dass** eine Vorrichtung zur Bestimmung der Schenkellänge (b) gemäß einem der Ansprüche 8 bis 17 vorgesehen ist.

19. Vorrichtung nach Anspruch 18, **dadurch gekennzeichnet, dass** als Haltevorrichtung zur definierten Anordnung des Biege-teils (12) bei der Bestimmung der Lage des Biegewinkelscheitels (S) und/oder bei der Bestimmung der Lage des Schenkelendes (E) das Biegewerkzeug (6) vorgesehen ist.

20. Vorrichtung nach Anspruch 18 oder 19, **dadurch gekennzeichnet, dass** die Anlage (27, 28), an welcher das Biegeteil (12) bei der Bestimmung der Lage des Biegewinkelscheitels (S) abgestützt ist, von dem Biegewerkzeug (6) ausgebildet ist.

21. Vorrichtung nach einem der Ansprüche 18 bis 20, **dadurch gekennzeichnet, dass** als Tasteinrichtung der Erfassungseinheit zur Erfassung der Lage des Schenkelendes (E) ein Positionieranschlag (17, 18) der Biegevorrichtung vorgesehen ist, an welchem das Werkstück vor der Bearbeitung zur Positionierung gegenüber dem Biegewerkzeug (6) anlegbar ist.

22. Vorrichtung nach einem der Ansprüche 18 bis 21, **dadurch gekennzeichnet, dass** die berührungslose, insbesondere optische Erfassungseinheit (20, 21) zur Erfassung der Lage des Schenkelendes (E) wenigstens teilweise an einem Positionieranschlag (17, 18) der Biegevorrichtung vorgesehen ist.

23. Vorrichtung nach einem der Ansprüche 18 bis 22, **dadurch gekennzeichnet, dass** der Positionieranschlag (17, 18) gesteuert bewegbar ist.

24. Vorrichtung nach einem der Ansprüche 18 bis 23, **dadurch gekennzeichnet, dass** die Auswerteeinrichtung (36) zur Bestimmung der Schenkellänge (b) Teil einer Maschinensteuerung (11) ist, in welcher wenigstens ein Sollwert für die Schenkellänge (b) hinterlegt ist und mittels derer ein von der Auswerteeinrichtung (36) bestimmter Schenkellängen-Istwert mit einem Schenkellängen-Sollwert vergleichbar und anhand des Ergebnisses dieses Ist-/Sollwert-Vergleichs wenigstens ein für die Schenkellänge (b) maßgebender Parameter zumindest eines nachfolgenden Biegevorgangs definierbar ist.

## Claims

1. Method for determining the arm length (b) of at least one of two arms (13, 14) on a bending part (12) which have been bent towards each other at a bending angle (β) by means of a bending tool (6), a bending angle point (S) being located at the intersection of extension directions (29, 30) of the arms (13, 14) of the bending part (12), which directions (29, 30) are linear and enclose the bending angle (β) and the arm length (b) being determined, from the position of the bending angle point (S) and from the position of an arm end (E) which delimits the relevant arm (13, 14) at the end remote from the bending angle point (S), as the distance between the bending angle point (S) and the arm end (E) of the relevant arm (13, 14), **characterised in that**, when the bending part (12) is arranged in a defined manner in the bending tool (6), the position of the bending angle point (S) and the position of the arm end (E) of the relevant arm (13, 14) are determined, and **in that** the arm length (b) is determined from the determined position of the bending angle point (S) and from the determined position of the arm end (E).

2. Method according to claim 1, **characterised in that** the bending part (12) is retained in the bending tool (6) for the defined arrangement.

3. Method according to claim 1 or 2, **characterised in that** the position of the bending angle point (S) is determined by establishing the bending angle (β).

4. Method according to any one of the preceding claims, **characterised in that** the bending part (12) is supported on a support (27, 28) when the position of the bending angle point (S) is determined, and **in that** the position of the bending angle point (S) is determined using the position at which the bending part (12) is supported on the support (27, 28).

5. Method according to any one of the preceding claims, **characterised in that** the bending angle (β) for determining the position of the bending angle point (S) is measured in a contactless manner, in particular optically, and/or **in that** the position of the arm end (E) is determined in a contactless manner, in particular optically.

6. Method for bending workpieces, in particular metal sheets, at least two arms (13, 14) on the workpiece being bent towards each other at a bending angle (β) by means of a bending tool (6) in order to produce a bending part (12) and the arm length (b) of at least one of the arms (13, 14) of the bending part (12) being determined, a bending angle point (S) being located at the intersection of extension directions (29, 30) of the arms (13, 14) of the bending part (12), which directions (29, 30) are linear and enclose the bending angle (β), and an arm end (E) of the relevant arm (13, 14) delimiting this arm at the end remote from the bending angle point (S), **characterised in that** the arm length (b) of at least one of the arms (13, 14) of the bending part (12) is determined in accordance with a method according to any one of the preceding claims.

7. Method according to claim 6, **characterised in that** an arm length actual value which is obtained as a result of determining the arm length (b) of an arm (13, 14) is compared with an arm length desired value, and **in that** at least one parameter of at least one subsequent bending operation, which parameter is significant for the arm length (b), is defined using the result of this actual/desired value comparison.

8. Device for determining the arm length (b) of at least one of two arms (13, 14) on a bending part (12) which have been bent towards each other at a bending angle (β) by means of a bending tool (6), a bending angle point (S) being located at the intersection of extension directions (29, 30) of the arms (13, 14) of the bending part (12), which directions (29, 30) are linear and enclose the bending angle (β), a device (34) being provided for determining the position of an arm end (E) which delimits the relevant arm (13, 14) at the end remote from the bending angle point (S) and the arm length (b) being able to be determined as the distance between the bending angle point (S) and the arm end (E), **characterised in that** a device (31) for determining the position of the bending angle point (S) and an evaluation device (36) are provided, the position of the bending angle point (S) and the position of the arm end (E) being able to be determined when the bending part (12) is arranged in a defined manner in the bending tool (6) by means of the device (31) for determining the position of the bending angle point (S) and by means of the device (34) for determining the position of the arm end (E), and the arm length (b) being able to be determined by means of the evaluation device (36) from the determined position of the bending angle point (S) and from the determined position of the arm end (E).

9. Device according to claim 8, **characterised in that** a retaining device is provided, by means of which the bending part (12) is retained in a defined manner in the bending tool (6) when the position of the bending angle point (S) is determined and when the position of the arm end (E) is determined.

10. Device according to claim 8 or 9, **characterised in that** the device (31) for determining the position of the bending angle point (S) comprises a device (9) for establishing the bending angle (β) and a calculation unit (32) which is connected, at one side, to the device (9) for establishing the bending angle (β) and, at the other side, to the evaluation device (36), and **in that** the position of the bending angle point (S) can be determined by means of the calculation unit (32) using the established bending angle (β).

11. Device according to any one of claims 8 to 10, **characterised in that** the device (31) for determining the position of the bending angle point (S) comprises a calculation unit (32) which is connected to the evaluation device (36) and a support (27, 28) for the bending part (12), on which support the bending part (12) is supported when the position of the bending angle point (S) is determined, and **in that** the position of the bending angle point (S) can be determined by means of the calculation unit (32) using the position at which the bending part (12) is supported on the support (27, 28).

12. Device according to any one of claims 8 to 11, **characterised in that** the device for establishing the bending angle (β) is constructed as a measuring device which functions in a contactless manner, in particular as an optical measuring device.

13. Device according to any one of claims 8 to 12, **characterised in that** the device (34) for determining the position of the arm end (E) comprises a detection unit (20, 21) for detecting the position of the arm end (E) and a calculation unit (35) which is connected, at one side, to the detection unit (20, 21) and, at the other side, to the evaluation device (36), and **in that** the position of the arm end (E) can be determined by means of the calculation unit (35) using the position of the arm end (E) detected by means of the detection unit (20, 21).

14. Device according to any one of claims 8 to 13, **characterised in that** the detection unit for detecting the position of the arm end (E) has a sensor device which can be fitted on the arm end (E).

15. Device according to any one of claims 8 to 14, **characterised in that** the sensor device which is fitted on the arm end (E) can be moved with the arm end (E) during its movement during the bending operation.

16. Device according to any one of claims 8 to 15, **characterised in that** the sensor device is formed by a positioning stop (17, 18) for the workpiece to be bent.

17. Device according to any one of claims 8 to 16, **characterised in that** the detection unit (20, 21) for detecting the position of the arm end (E) is constructed as a detection unit which functions is a contactless manner, in particular as an optical detection unit (20, 21).

18. Device for bending workpieces, in particular metal sheets, having a bending tool (6), by means of which at least two arms (13, 14) on a workpiece can be bent towards each other at a bending angle (β) in order to produce a bending part (12), a bending angle point (S) being located at the intersection of extension directions (29, 30) of the arms (13, 14) of the bending part (12), which directions (29, 30) are linear and enclose the bending angle (β), and an arm end (E) of the relevant arm (13, 14) delimiting this arm at the end remote from the bending angle point (S), **characterised in that** a device for determining the arm length (b) is provided according to any one of claims 8 to 17.

19. Device according to claim 18, **characterised in that** the bending tool (6) is provided as a retaining device for the defined arrangement of the bending part (12) when the position of the bending angle point (S) is determined and/or when the position of the arm end (E) is determined.

20. Device according to claim 18 or 19, **characterised in that** the support (27, 28), on which the bending part (12) is supported when the position of the bending angle point (S) is determined, is formed by the bending tool (6).

21. Device according to any one of claims 18 to 20, **characterised in that** a positioning stop (17, 18) of the bending device is provided as a sensor device of the detection unit for detecting the position of the arm end (E), on which positioning stop the workpiece can be fitted before the processing operation in order to be positioned relative to the bending tool (6).

22. Device according to any one of claims 18 to 21, **characterised in that** the contactless, in particular optical, detection unit (20, 21) for detecting the position of the arm end (E) is provided at least partially on a positioning stop (17, 18) of the bending device.

23. Device according to any one of claims 18 to 22, **characterised in that** the positioning stop (17, 18) can be moved in a controlled manner.

24. Device according to any one of claims 18 to 23, **characterised in that** the evaluation device (36) for determining the arm length (b) is part of a machine control (11), in which at least one desired value for the arm length (b) is stored and by means of which an arm length actual value determined by the evaluation device (36) can be compared with an arm length desired value and, using the result of this actual/desired value comparison, at least one parameter of at least one subsequent bending operation, which parameter is significant for the arm length (b), can be defined.

## Revendications

1. Procédé de détermination de la longueur (b) d'au moins l'une de deux branches (13, 14) d'une pièce cintrée (12), coudées l'une par rapport à l'autre au moyen d'un outil de cintrage (6), en décrivant un angle de cintrage (β), sachant qu'un sommet (S) dudit angle de cintrage se trouve au point d'intersection entre des directions rectilignes (29, 30) d'étendue des branches (13, 14) de la pièce cintrée (12), lesdites directions décrivant l'angle de cintrage (β), et sachant que la longueur (b) des branches est déterminée à partir de la position du sommet (S) de l'angle de cintrage et à partir de la position d'une extrémité (E) de branche qui délimite la branche (13, 14) considérée, du côté éloigné du sommet (S) de l'angle de cintrage, en tant que tracé compris entre ledit sommet (S) de l'angle de cintrage et l'extrémité (E) de la branche (13, 14) considérée, **caractérisé par le fait que** la position du sommet (S) de l'angle de cintrage, ainsi que la position de l'extrémité (E) de la branche (13, 14) considérée, sont déterminées lorsque la pièce cintrée (12) occupe une position bien définie dans l'outil de cintrage (6) ; et **par le fait que** la longueur (b) des branches est déterminée sur la base de la position déterminée du sommet (S) de l'angle de cintrage, et sur la base de la position déterminée de l'extrémité (E) desdites branches.

2. Procédé selon la revendication 1, **caractérisé par le fait que** la pièce cintrée (12) est retenue, dans l'outil de cintrage (6), en vue d'une disposition bien définie.

3. Procédé selon la revendication 1 ou 2, **caractérisé par le fait que** la position du sommet (S) de l'angle de cintrage est déterminée en établissant ledit angle de cintrage (β).

4. Procédé selon l'une des revendications précédentes, **caractérisé par le fait que** la pièce cintrée (12) est en appui contre un soutien (27, 28) lors de la détermination de la position du sommet (S) de l'angle de cintrage ; et **par le fait que** ladite position du sommet (S) de l'angle de cintrage est déterminée sur la base de la position de l'appui de ladite pièce cintrée (12) contre ledit soutien (27, 28).

5. Procédé selon l'une des revendications précédentes, **caractérisé par le fait que** l'angle de cintrage (β) est mesuré sans contact, notamment en mode optique, en vue de déterminer la position du sommet (S) dudit angle de cintrage ; et/ou **par le fait que** la position de l'extrémité (E) des branches est déterminée sans contact, notamment en mode optique.

6. Procédé de cintrage de pièces à usiner, notamment de tôles, au moins deux branches (13, 14) étant coudées l'une par rapport à l'autre sur la pièce à usiner, au moyen d'un outil de cintrage (6), en décrivant un angle de cintrage (β), et la longueur (b) d'au moins l'une desdites branches (13, 14) de la pièce cintrée (12) étant déterminée, sachant qu'un sommet (S) de l'angle de cintrage se trouve au point d'intersection entre des directions rectilignes (29, 30) d'étendue des branches (13, 14) de la pièce cintrée (12), lesdites directions décrivant l'angle de cintrage (β), et sachant qu'une extrémité (E) de la branche (13, 14) considérée délimite cette dernière du côté éloigné du sommet (S) de l'angle de cintrage, **caractérisé par le fait que** la longueur (b) d'au moins l'une des branches (13, 14) de la pièce cintrée (12) est déterminée d'après un procédé conforme à l'une des revendications précédentes.

7. Procédé selon la revendication 6, **caractérisé par le fait qu'**une valeur réelle de la longueur des branches, obtenue en tant que résultat de la détermination de la longueur (b) d'une branche (13, 14), est comparée à une valeur de consigne de la longueur des branches ; et **par le fait que**, sur la base du résultat de cette comparaison valeur réelle/valeur de consigne, l'on définit au moins un paramètre d'au moins une opération de cintrage successive, qui est déterminant pour ladite longueur (b) des branches.

8. Dispositif de détermination de la longueur (b) d'au moins l'une de deux branches (13, 14) d'une pièce cintrée (12), coudées l'une par rapport à l'autre au moyen d'un outil de cintrage (6), en décrivant un angle de cintrage (β), sachant qu'un sommet (S) dudit angle de cintrage se trouve au point d'intersection entre des directions rectilignes (29, 30) d'étendue des branches (13, 14) de la pièce cintrée (12), lesdites directions décrivant l'angle de cintrage (β), sachant qu'un dispositif (34) est prévu pour déterminer la position d'une extrémité (E) de branche qui délimite la branche (13, 14) considérée, du côté éloigné du sommet (S) de l'angle de cintrage, et sachant que la longueur (b) des branches peut être déterminée en tant que tracé compris entre ledit sommet (S) de l'angle de cintrage et l'extrémité (E) des branches, **caractérisé par** la présence d'un dispositif (31) pour déterminer la position du sommet (S) de l'angle de cintrage, ainsi que d'un système d'interprétation (36), sachant que la position du sommet (S) de l'angle de cintrage et la position de l'extrémité (E) des branches peuvent être déterminées au moyen du dispositif (31) de détermination de la position dudit sommet (S) de l'angle de cintrage, et au moyen du dispositif (34) de détermination de la position de ladite extrémité (E) des branches, lorsque la pièce cintrée (12) occupe une position bien définie dans l'outil de cintrage (6), et sachant que la longueur (b) des branches peut être déterminée au moyen du système d'interprétation (36), sur la base de la position déterminée du sommet (S) de l'angle de cintrage, et sur la base de la position déterminée de l'extrémité (E) des branches.

9. Dispositif selon la revendication 8, **caractérisé par** la présence d'un dispositif de retenue au moyen duquel la pièce cintrée (12) est retenue de manière bien définie, dans l'outil de cintrage (6), lors de la détermination de la position du sommet (S) de l'angle de cintrage, et lors de la détermination de la position de l'extrémité (E) des branches.

10. Dispositif selon la revendication 8 ou 9, **caractérisé par le fait que** le dispositif (31) de détermination de la position du sommet (S) de l'angle de cintrage englobe un dispositif (9) pour établir l'angle de cintrage (β), ainsi qu'une unité de calcul (32) en liaison, d'une part, avec ledit dispositif (9) pour établir l'angle de cintrage (β) et, d'autre part, avec le système d'interprétation (36) ; et **par le fait que** la position du sommet (S) de l'angle de cintrage peut être déterminée, au moyen de l'unité de calcul (32), sur la base de l'angle de cintrage (β) établi.

11. Dispositif selon l'une des revendications 8 à 10, **caractérisé par le fait que** le dispositif (31) de détermination de la position du sommet (S) de l'angle de cintrage englobe une unité de calcul (32) en liaison avec le système d'interprétation (36), ainsi qu'un soutien (27, 28) qui est affecté à la pièce cintrée (12), et contre lequel ladite pièce cintrée (12) prend appui lors de la détermination de la position dudit sommet (S) de l'angle de cintrage ; et **par le fait que** la position du sommet (S) de l'angle de cintrage peut être déterminée, au moyen de l'unité de calcul (32), sur la base de la position de l'appui de ladite pièce cintrée (12) contre ledit soutien (27, 28).

12. Dispositif selon l'une des revendications 8 à 11, **caractérisé par le fait que** le dispositif pour établir l'angle de cintrage (β) est réalisé sous la forme d'un dispositif mesureur fonctionnant sans contact, notamment en tant que dispositif optique.

13. Dispositif selon l'une des revendications 8 à 12, **caractérisé par le fait que** le dispositif (34) de détermination de la position de l'extrémité (E) des branches englobe une unité détectrice (20, 21) pour détecter la position de l'extrémité (E) des branches, ainsi qu'une unité de calcul (35) en liaison, d'une part, avec ladite unité détectrice (20, 21) et, d'autre part, avec le système d'interprétation (36) ; et **par le fait que** la position de l'extrémité (E) des branches peut être déterminée au moyen de l'unité de calcul (35), sur la base de la position de ladite extrémité (E) des branches, détectée au moyen de ladite unité détectrice (20, 21).

14. Dispositif selon l'une des revendications 8 à 13, **caractérisé par le fait que** l'unité détectrice, conçue pour détecter la position de l'extrémité (E) des branches, présente un système palpeur pouvant être appliqué contre ladite extrémité (E) des branches.

15. Dispositif selon l'une des revendications 8 à 14, **caractérisé par le fait que** le système palpeur, appliqué contre l'extrémité (E) des branches, peut être déplacé avec ladite extrémité (E) des branches lors du mouvement de cette dernière au cours de l'opération de cintrage.

16. Dispositif selon l'une des revendications 8 à 15, **caractérisé par le fait que** le système palpeur est matérialisé par une butée de positionnement (17, 18) assignée à la pièce devant être cintrée.

17. Dispositif selon l'une des revendications 8 à 16, **caractérisé par le fait que** l'unité détectrice (20, 21), conçue pour détecter la position de l'extrémité (E) des branches, est réalisée sous la forme d'une unité détectrice fonctionnant sans contact, notamment en tant qu'unité détectrice optique (20, 21).

18. Dispositif de cintrage de pièces à usiner, notamment de tôles, comportant un outil de cintrage (6) au moyen duquel au moins deux branches (13, 14) peuvent être coudées l'une par rapport à l'autre en décrivant un angle de cintrage (β) sur une pièce à usiner, en vue de produire une pièce cintrée (12), un sommet (S) de l'angle de cintrage se trouvant au point d'intersection entre des directions rectilignes (20, 30) d'étendue des branches (13, 14) de la pièce cintrée (12), lesdites directions décrivant l'angle de cintrage (β), et une extrémité (E) de la branche (13, 14) considérée délimitant ladite branche du côté éloigné du sommet (S) de l'angle de cintrage, **caractérisé par** la présence d'un dispositif de détermination de la longueur (b) des branches, conforme à l'une des revendications 8 à 17.

19. Dispositif selon la revendication 18, **caractérisé par le fait que** l'outil de cintrage (6) est prévu en tant que dispositif de retenue pour la disposition bien définie de la pièce cintrée (12), lors de la détermination de la position du sommet (S) de l'angle de cintrage, et/ou lors de la détermination de la position de l'extrémité (E) des branches.

20. Dispositif selon la revendication 18 ou 19, **caractérisé par le fait que** le soutien (27, 28), contre lequel la pièce cintrée (12) prend appui lors de la détermination de la position du sommet (S) de l'angle de cintrage, est matérialisé par l'outil de cintrage (6).

21. Dispositif selon l'une des revendications 18 à 20, **caractérisé par le fait qu'**il est prévu, en tant que système palpeur de l'unité détectrice conçue pour détecter la position de l'extrémité (E) des branches, une butée de positionnement (17, 18) du dispositif de cintrage contre laquelle la pièce peut être appliquée, préalablement à l'usinage, en vue du positionnement par rapport à l'outil de cintrage (6).

22. Dispositif selon l'une des revendications 18 à 21, **caractérisé par le fait que** l'unité détectrice (20, 21) fonctionnant sans contact, notamment en mode optique, et conçue pour détecter la position de l'extrémité (E) des branches, est prévue au moins en partie sur une butée de positionnement (17, 18) du dispositif de cintrage.

23. Dispositif selon l'une des revendications 18 à 22, **caractérisé par le fait que** la butée de positionnement (17, 18) peut être animée de mouvements commandés.

24. Dispositif selon l'une des revendications 18 à 23, **caractérisé par le fait que** le système d'interprétation (36), conçu pour déterminer la longueur (b) des branches, fait partie intégrante d'une commande (11) de machine dans laquelle est stockée au moins une valeur de consigne relative à la longueur (b) des branches, et au moyen de laquelle une valeur réelle de la longueur des branches, déterminée par ledit système d'interprétation (36), peut être comparée à une valeur de consigne de ladite longueur des branches et, sur la base du résultat de cette comparaison valeur réelle/valeur de consigne, il est possible de définir au moins un paramètre d'au moins une opération de cintrage successive, qui est déterminant pour ladite longueur (b) des branches.
